# FASCICULE DE BREVET EUROPEEN

(11) **EP 4 171 916 B1**
(45) Date de publication et mention de la délivrance du brevet: **27.08.2025**
(21) Numéro de dépôt: 21737069.1
(22) Date de dépôt: 29.06.2021
(51) Int. Cl.: B29C 33/44, B29C 45/40

(54) **DISPOSITIF D'ÉJECTION POUR MOULE COMPRENANT UNE CHAÎNE DE MAILLONS COULISSANTS ET UNE CALE DE RÉGLAGE**
VORRICHTUNG ZUM AUSSTOSSEN EINER FORM MIT EINER KETTE MIT GLEITGLIEDERN UND EINEM EINSTELLKEIL
DEVICE FOR EJECTING A MOULD, COMPRISING A CHAIN WITH SLIDING LINKS AND AN ADJUSTMENT SHIM

(30) Priorité: 29.06.2020 FR 2006783
(43) Date de publication de la demande: 03.05.2023
(73) Titulaire: Faurecia Intérieur Industrie, 92000 Nanterre (FR)
(72) Inventeur: BELLIARD, Sylvain, 72700 ROUILLON (FR)
(74) Mandataire: Novagraaf Group
(86) Numéro de dépôt international: PCT/EP2021/067792
(87) Numéro de publication internationale: WO 2022/002903

(56) Documents cités:
- EP-A1- 3 210 735
- FR-A1- 3 073 442

## Description

La présente invention concerne un dispositif d'éjection pour moule de réalisation d'un article moulé dans une cavité de moulage destiné à permettre l'éjection de l'article moulé hors de la cavité de moulage, ledit dispositif comprenant :
- un dispositif de poussée mobile en translation selon un premier axe entre une position rétractée et une position d'éjection,
- au moins un élément d'éjection mobile en translation selon un deuxième axe, différent du premier axe, entre une position rétractée et une position d'éjection,
- au moins un dispositif de transfert reliant le dispositif de poussée et l'élément d'éjection, ledit dispositif de transfert étant agencé pour déplacer l'élément d'éjection selon le deuxième axe entre sa position rétractée et sa position d'éjection lorsque le dispositif de poussée est déplacé selon le premier axe entre sa position rétractée et sa position d'éjection, le dispositif de transfert comprenant une chaîne de transmission comprenant au moins deux maillons de transmission mobiles en translation selon une direction de coulissement l'un par rapport à l'autre et par rapport au dispositif de poussée et à l'élément d'éjection. Un tel dispositif d'éjection permet par exemple de démouler un article moulé de forme complexe, par exemple une pièce non plane ou présentant des zones s'étendant dans un ou plusieurs plans différents d'un plan perpendiculaire à la direction d'éjection ou comprenant des éléments s'étendant en saillie selon une direction différente de la direction d'éjection ou encore des zones en contredépouille. En effet, en prévoyant par exemple un dispositif d'éjection comprenant une tige d'éjection éjectant la pièce selon le premier axe et une autre tige formant l'élément d'éjection et éjectant la pièce selon le deuxième axe, une pièce de forme complexe peut être éjectée.

Le document EP-3 210 735 décrit un tel dispositif d'éjection, dans lequel il est prévu de faire coulisser les maillons de la chaîne de transmission selon des surfaces de glissement formant un angle par rapport à une direction perpendiculaire au premier axe de déplacement de la chaîne de transmission. L'angle est choisi pour synchroniser le déplacement de l'élément d'éjection par rapport à celui du dispositif de poussée, notamment pour accélérer ou pour ralentir le mouvement de l'élément d'éjection par rapport à celui du dispositif de poussée. Une telle synchronisation permet d'ajuster le déplacement de l'élément d'éjection par rapport à une ou plusieurs autres tiges d'éjection également déplacées par le dispositif de poussée pour démouler d'autres parties de l'article moulé afin que l'élément d'éjection et les tiges d'éjection atteignent leur position d'éjection en même temps alors que les courses de déplacement de l'élément d'éjection et des autres tiges d'éjection entre la position rétractée et la position d'éjection sont différentes.

Cependant, ce document ne décrit pas de façon simple de régler cet angle afin de pouvoir le changer facilement lorsque la synchronisation du déplacement de l'élément d'éjection par rapport à celui du dispositif de poussée doit être modifiée.

Le document FR-3 073 442 décrit un dispositif d'éjection comprenant un élément d'éjection dont le déplacement est actionné par un actionneur.

L'un des buts de l'invention est de pallier cet inconvénient en proposant un dispositif d'éjection permettant de modifier simplement l'angle selon lequel les maillons coulissent les uns par rapport aux autres.

A cet effet, l'invention concerne un dispositif d'éjection du type précité, comprenant en outre au moins une cale de réglage montée sur le dispositif de poussée, ladite cale de réglage comprenant une surface de réglage formant un angle de réglage par rapport à une direction sensiblement perpendiculaire au premier axe, la chaîne de transmission étant montée sur ladite surface de réglage de sorte que la direction de coulissement est sensiblement parallèle à ladite surface de réglage.

Ainsi, la cale de réglage permet d'ajuster facilement l'angle de coulissement des maillons de transmission les uns par rapport aux autres en choisissant l'angle de réglage de la surface de réglage sur laquelle la chaîne de transmission est montée coulissante. Lorsque l'angle de coulissement doit être modifié, il suffit de prévoir une autre cale de réglage présentant une surface de réglage formant l'angle voulu et de monter cette nouvelle cale sur le dispositif de poussée. Ainsi, l'angle de coulissement peut être modifié simplement sans nécessiter notamment de modifier le dispositif de poussée en lui-même.

Selon d'autres caractéristiques optionnelles du dispositif d'éjection, prises isolément ou selon toute combinaison techniquement envisageables :
- l'angle de réglage est négatif pour retarder le déplacement de l'élément d'éjection par rapport au dispositif de poussée, positif pour accélérer le déplacement de l'élément d'éjection par rapport au dispositif de poussée ou nul pour déplacer l'élément d'éjection à la même vitesse que le dispositif de poussée ;
- la chaîne de transmission comprend un maillon de liaison, monté mobile en translation sur un maillon de transmission d'une part, l'élément d'éjection étant monté mobile en rotation sur ledit maillon de liaison autour d'un axe de rotation sensiblement perpendiculaire aux premier et deuxième axes ;
- le maillon de liaison comprend deux surfaces de débattement de l'élément d'éjection, les deux surfaces de débattement s'étendant chacune d'une partie centrale du maillon de liaison vers un bord dudit maillon de liaison, le maillon de liaison s'orientant par rapport à l'élément d'éjection, les surfaces de débattement autorisant cette orientation en fonction de l'angle de réglage lorsque l'élément d'éjection se déplace selon le deuxième axe entre sa position rétractée et sa position d'éjection ;
- les deux surfaces de débattement du maillon de liaison sont sensiblement symétriques l'une de l'autre par rapport à la partie centrale du maillon de liaison ;
- le maillon de liaison est lié à l'élément d'éjection par un élément de liaison articulé au maillon de liaison et à la l'élément d'éjection de sorte à autoriser une rotation du maillon de liaison par rapport à l'élément d'éjection ;
- la chaîne de transmission comprend un maillon de réglage monté mobile en translation sur un maillon de transmission, le maillon de réglage comprenant une surface de positionnement s'étendant sur la surface de réglage de la cale de réglage de sorte que la direction de coulissement entre le maillon de réglage et le maillon de transmission est sensiblement parallèle à ladite surface de réglage ;
- chaque maillon de la chaîne de transmission comprend au moins deux surfaces de glissement, agencées pour coulisser sur des surfaces de glissement de maillons adjacents, lesdites surfaces de glissement s'étendant sensiblement parallèlement à la surface de réglage de la cale de réglage ;
- chaque maillon de la chaîne de transmission est lié à au moins un autre maillon de la chaîne de transmission par au moins un élément de liaison agencé pour autoriser le déplacement en translation des maillons l'un par rapport à l'autre ; et
- les maillons de transmission sont identiques les uns aux autres. D'autres aspects et avantages de l'invention apparaîtront à la lecture de la description qui suit, donnée à titre d'exemple et faite en référence aux dessins annexés, dans lesquels :
   [Fig 1] - la Fig. 1 est une représentation schématique en perspective d'une première partie de moule comprenant un dispositif d'éjection selon un mode de réalisation de l'invention, le dispositif d'éjection étant en position rétractée,
   [Fig 2] - la Fig. 2 est une représentation schématique en perspective d'une partie du dispositif d'éjection de la Fig. 1,
   [Fig 3] - la Fig. 3 est une représentation schématique en perspective d'une cale de réglage et d'un maillon réglage du dispositif d'éjection de la Fig. 2,
   [Fig 4] - la Fig. 4 est une représentation schématique en perspective d'un maillon de liaison et d'un élément d'éjection du dispositif d'éjection de la Fig. 2,
   [Fig. 5] [Fig 6] [Fig 7] - les Figs. 5 à 7 sont des représentations schématiques en coupe de la première partie de moule de la Fig. 1, le dispositif d'éjection passant de la position rétractée à la position d'éjection en passant par une position intermédiaire, et
   [Fig. 8] [Fig 9] [Fig 10] [Fig 11] [Fig 12] - les Figs. 8 à 12 sont des représentations schématiques en coupe de la première partie de moule, le dispositif d'éjection étant en position rétractée, et montrant différentes couses de déplacement du dispositif d'éjection.

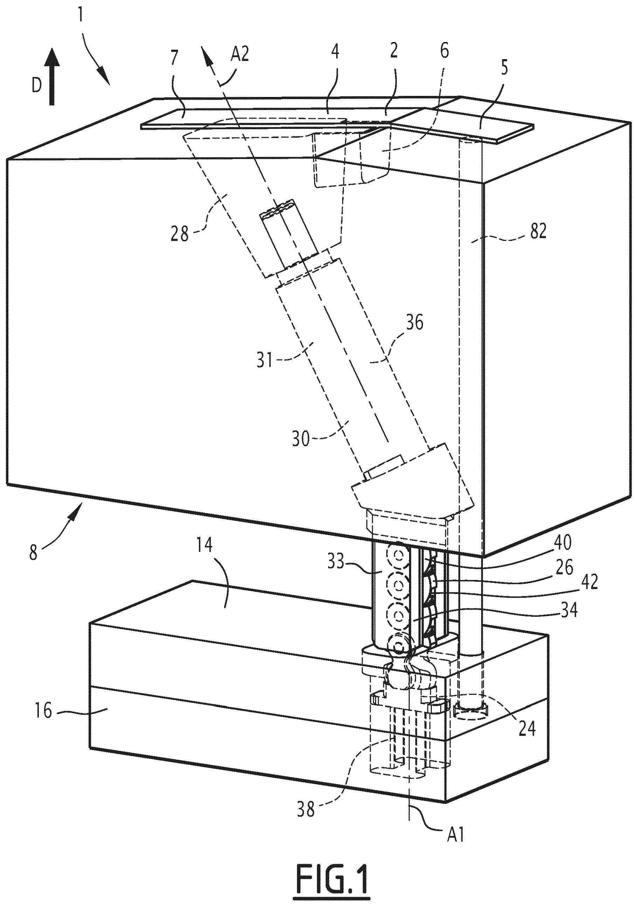

En référence à la Fig. 1, on décrit un moule de réalisation 1 d'un article moulé 2 pouvant présenter toute forme apte à être moulée. Un tel moule de réalisation 1 est par exemple un moule d'injection, un moule de compression, un moule de moussage ou autre. Plus généralement, un moule permet de conférer une forme voulue à un matériau disposé dans une cavité de moulage présentant la forme voulue de l'article à mouler.

L'article moulé 2 est par exemple une pièce de véhicule automobile ou autre. Plus particulièrement, selon le mode de réalisation représenté sur les figures, l'article moulé 2 comprend une surface principale 4 et une partie en contre-dépouille 6 par rapport à la surface principale, c'est-à-dire une partie comprenant au moins une surface non démoulable par simple écartement de deux parties de moule et nécessitant un élément de moulage complémentaire et déplaçable selon une direction différente de la direction d'écartement des deux parties de moule.

Le moule de réalisation 1 comprend une première partie 8 et une deuxième partie (non représentée pour simplifier les figures), mobiles l'une par rapport à l'autre entre une position ouverte, dans laquelle les première et deuxième parties sont écartées l'une de l'autre et une position fermée, dans laquelle les première et deuxième parties sont rapprochées l'une de l'autre de sorte à définir une cavité de moulage principale fermée. La cavité de moulage principale présente une forme complémentaire de la surface principale 4 de l'article moulé à réaliser. Le déplacement de la position fermée à la position ouverte se fait selon une direction d'ouverture D, représentée sur les figures. La première partie 8 comprend une surface de moulage 10 définissant, avec une surface de moulage de la deuxième partie, la cavité de moulage principale lorsque les première et deuxième parties sont en position fermée.

La surface principale 4 de l'article moulé 2 est telle qu'elle peut être séparée de la surface de moulage 10 par un déplacement de l'article moulé selon une unique direction d'éjection, par exemple parallèle à la direction d'ouverture D. Par conséquent, la surface principale 4 n'est pas nécessairement plane et peut présenter toute forme permettant un démoulage par déplacement de l'article moulée 2 selon la direction d'éjection. Ainsi, selon le mode de réalisation représenté sur les figures, la surface principale 4 comprend une première partie 5 sensiblement perpendiculaire à la direction d'ouverture D et une deuxième partie 7 inclinée par rapport à la première partie 5. Il convient de noter que la cavité de moulage principale pourrait également être agencée pour former des éléments s'étendant en saillie de la surface principale 4, par exemple des nervures, tant que ces éléments peuvent également être séparés de la cavité de moulage principale par un déplacement de l'article moulé 2 selon la direction d'éjection.

Selon le mode de réalisation représenté sur les figures, la cavité de moulage principale est en communication fluidique avec une cavité de moulage secondaire définie par la surface de moulage 10 de la première partie 8 et par une surface de moulage complémentaire 12 portée par un dispositif d'éjection selon l'invention, comme cela sera décrit ultérieurement. La cavité de moulage complémentaire présente une forme complémentaire de la partie en contredépouille 6 de l'article moulé 2. La cavité de moulage principale et la cavité de moulage secondaire forment ensemble la cavité de moulage du moule de réalisation 1. Il est entendu que plusieurs cavités de moulage secondaires peuvent être prévues en fonction de la forme de l'article à mouler.

Le moule de réalisation 1 est par exemple un moule d'injection agencé pour injecter une matière plastique à une pression prédéterminée dans la cavité de moulage. A cet effet, le moule de réalisation 1 comprend tous les moyens permettant de réaliser et de contrôler cette injection et la formation de la pièce, tels qu'une ou plusieurs buses d'injection du matériau plastique, des moyens de régulations de la température de la cavité de moulage, des moyens d'actionnement et de déplacement des première et deuxième parties du moule de réalisation 1, etc. De tels moyens étant connus, ils ne seront pas décrits plus en détail ici.

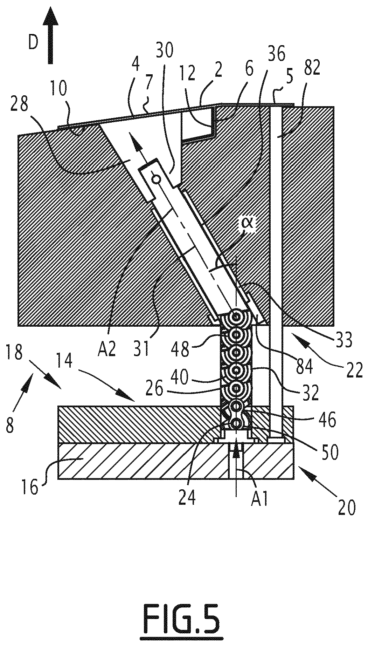

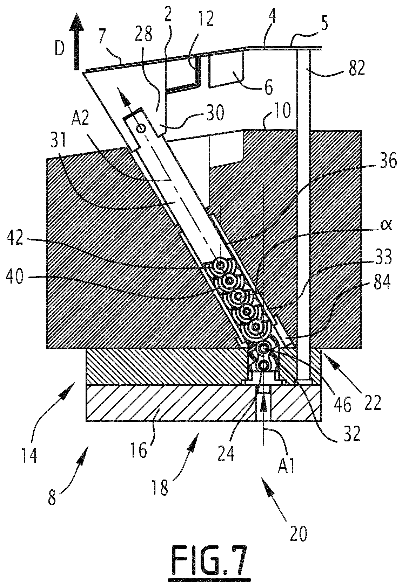

Le moule de réalisation 1 comprend un dispositif d'éjection agencé pour faciliter le retrait de l'article moulé 2 du moule de réalisation après sa réalisation. Une fois que l'article moulé 2 est réalisé, les première et deuxième parties du moule sont déplacées dans la position ouverte. L'article moulé 2 se trouve alors contre la surface de moulage de la première partie 8, comme représenté sur les Figs. 1 et 5, et le dispositif d'éjection est agencé pour écarter l'article moulé 2 de la surface de moulage 10, comme représenté sur la Fig. 7, afin de permettre la préhension de l'article moulé 2 pour le sortir du moule de réalisation. Il convient de noter que le dispositif d'éjection peut être actionné au cours de l'ouverture du moule 1 de sorte que l'éjection de l'article moulé 2 ne débute pas nécessairement alors que le moule est déjà en position ouverte.

Le dispositif d'éjection comprend un dispositif de poussée 14 mobile en translation dans la première partie 8 selon un premier axe A1 entre une position rétractée, représentée sur les Figs 1 et 5, et une position d'éjection, représentée sur la Fig. 7. Le premier axe A1 s'étend selon la direction d'éjection et est par exemple sensiblement parallèle à la direction d'ouverture D de sorte que, en position d'éjection, l'article moulé 2 est écarté de la surface de moulage 10 dans l'espace entre la première partie 8 et la deuxième partie du moule.

Le dispositif de poussée 14 comprend au moins une plaque d'éjection 16 disposée, de façon mobile en translation selon le premier axe A1, dans un espace 18 de la première partie 8. Dans la position rétractée, la plaque d'éjection 16 est disposée dans une partie amont 20 de l'espace 18, c'est-à-dire la partie de l'espace 18 la plus éloignée de la surface de moulage 10, et, dans la position d'éjection, la plaque d'éjection 16 est disposée dans une partie aval 22 de l'espace 18, c'est-à-dire la partie de l'espace 18 la plus rapprochée de la surface de moulage 10.

Le dispositif de poussée 14 comprend en outre un élément d'actionnement 24 solidaire en déplacement de la plaque d'éjection 16, l'élément d'actionnement 24 est relié à un dispositif de transfert 26 lui-même relié à un élément d'éjection 28.

L'élément d'éjection 28 est mobile en translation selon un deuxième axe A2 différent du premier axe A1. Selon le mode de réalisation représenté sur les figures, l'élément d'éjection 28 est un bloc mobile portant la surface de moulage complémentaire 12. Ainsi, en position rétractée, le bloc est disposé dans la première partie 8 de sorte que la surface de moulage complémentaire 12 s'étende en regard de la surface de moulage 10 de la première partie 8 et définisse avec celle-ci la cavité de moulage complémentaire. Le bloc mobile comprend une extrémité d'actionnement 30. L'élément d'éjection 28 comprend en outre une tige d'actionnement 31 reliée, par son extrémité avale, à l'extrémité d'actionnement 30 du bloc mobile et s'étendant selon le deuxième axe A2. L'extrémité amont de la tige d'actionnement 31 est reliée quant à elle au dispositif de transfert 26, comme cela sera décrit ultérieurement. Il convient de noter que la tige d'actionnement 31 pourrait être réalisée d'une seule pièce avec le bloc mobile. Cependant, prévoir un bloc mobile et une tige d'actionnement 31 formés de deux pièces séparées permet d'améliorer l'adaptabilité de l'élément d'éjection 28 à différents moules, comme cela sera décrit ultérieurement.

Le deuxième axe A2 forme un angle α avec le premier axe A1. La valeur de l'angle α est choisie en fonction de la forme de l'article moulé. Plus particulièrement, dans le cas où l'article moulé comprend une zone en contredépouille 6, l'angle α dépend de la distance nécessaire pour sortir le bloc mobile de la zone en contredépouille 6 au cours de l'éjection de l'article moulé 2, comme cela sera décrit ultérieurement.

Ainsi, l'élément d'éjection 28 est déplaçable entre une position rétractée et une position d'éjection, respectivement lorsque le dispositif de poussée 14 est en position rétractée et en position d'éjection par l'intermédiaire du dispositif de transfert 26 qui est agencé pour transformer le mouvement du dispositif de poussée 14 selon le premier axe A1 en mouvement de l'élément d'éjection 28 selon le deuxième axe A2, comme cela va à présent être décrit.

Le dispositif de transfert 26 comprend un élément de guidage 33 s'étendant dans la première partie 8 du moule de l'espace 18 à la surface de moulage 10 selon un trajet s'étendant selon le premier axe A1 dans l'espace 18 et selon le deuxième axe A2 dans la partie de la première partie 8 de moule s'étendant entre l'espace 18 et la surface de moulage 10. L'élément de guidage 33 comprend un premier tronçon 32, par exemple formé par deux profilés 34, s'étendant dans l'espace 18 selon le premier axe A1 et définissant, par exemple entre les deux profilés 34, une première gorge, ou glissière de guidage. L'élément de guidage 33 comprend également un deuxième tronçon 36, par exemple formé par un tube, s'étendant dans la première partie 8 entre l'espace 18 et la surface de moulage 10 selon le deuxième axe A2, et définissant, par exemple dans le volume interne du tube, une deuxième gorge, ou glissière, de guidage. L'élément de guidage 33 est fixe par rapport à la première partie 8 de moule.

Il convient de noter que la plaque d'éjection 16 est mobile en translation par rapport à l'élément de guidage 33. A cet effet, la plaque d'éjection 16 comprend une empreinte 38 agencée pour recevoir les deux profilés 34 du premier tronçon 32. Cette empreinte 38 est apte à coulisser autour et le long du premier tronçon 32, ce qui permet de déplacer la plaque d'éjection 16 entre sa position rétractée et sa position d'éjection, comme cela sera décrit ultérieurement.

Le dispositif de transfert 26 comprend en outre une chaîne de transmission 40 reliée d'une part au dispositif de poussée 14 et d'autre part à l'élément d'éjection 28. La chaîne de transmission 40 comprend au moins deux maillons de transmission 42 reliés entre eux et mobiles l'un par rapport à l'autre en translation. La translation des maillons de transmission 42 se fait selon des surfaces de glissement 44, les surfaces de glissement 44 étant sensiblement parallèles les unes par rapport aux autres. Les maillons de transmission 42 sont en outre mobiles en translation par rapport au dispositif de poussée 14 et à l'élément d'éjection 28. A cet effet, chaque maillon de transmission 42 comprend au moins deux surfaces de glissement 44, l'une formant une surface de translation avec un maillon de transmission 42 adjacent et l'autre formant une surface de translation avec un maillon de transmission 42 adjacent ou avec un maillon de réglage 46 ou avec un maillon de liaison 48, comme cela sera décrit ultérieurement. La longueur des surfaces de glissement 44 est telle que les maillons de transmission 42 ne se désengagent pas les uns des autres lors du déplacement du dispositif d'éjection entre sa position rétractée et sa position d'éjection. En outre, ces surfaces de glissement 44 sont de longueur suffisante pour pouvoir transmettre les efforts de poussée de la plaque d'éjection 16 à l'élément d'éjection 28.

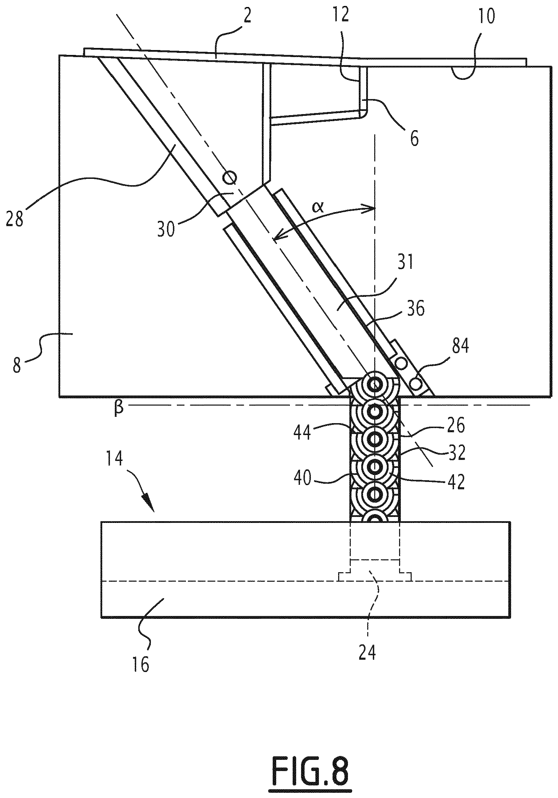

Chaque surface de glissement 44 forme un angle β avec une direction perpendiculaire au premier axe A1, comme représenté sur les Figs. 8 à 12. Le réglage de l'angle β par rapport au premier axe A1 permet de régler l'avance ou le retard de déplacement de l'élément d'éjection 28 par rapport au déplacement du dispositif de poussée 14, comme cela sera décrit ultérieurement.

Le nombre de maillons de transmission 42 de la chaîne de transmission 40 dépend du trajet suivi par les maillons de transmission 42 dans l'élément de guidage 33 et est agencé pour que la chaîne de transmission 40 relie le dispositif de poussée 14 à l'élément d'éjection 28. Plus particulièrement, la chaîne de transmission 40 relie une cale de réglage 50 solidaire de la plaque d'éjection 16 à l'extrémité amont de la tige d'actionnement 31. La cale de réglage 50 sera décrite ultérieurement.

Ainsi, la chaîne de transmission 40 peut comprendre plus de deux maillons de transmission 42, dont deux maillons de transmission d'extrémité reliés respectivement à un maillon de réglage 46 et à un maillon de liaison 48, et au moins un maillon de transmission intermédiaire relié aux deux maillons de transmission d'extrémité ou plusieurs maillons de transmission reliés successivement les uns aux autres de sorte à former la chaîne de transmission 40 du maillon de réglage 46 au maillon de liaison 48.

Tous les maillons de transmission 42 sont identiques, c'est-à-dire qu'ils présentent une forme et une structure identiques, qu'ils soient des maillons de transmission d'extrémité ou des maillons de transmission intermédiaires.

Plusieurs formes de maillon de transmission 44 peuvent être envisagées. Une de ces formes va être décrit ci-dessous et l'homme du métier pourra se référer au document EP-3 210 735 pour voir d'autres exemples de formes envisageables. Quelle que soit la forme choisie, celle-ci doit être adaptée pour que les maillons de transmission 42 puissent coopérer entre eux et avec l'élément de guidage 33 sur toute la course de déplacement des maillons de transmission 42 de sorte que les maillons de transmission 42 soient guidés dans l'élément de guidage 33 sur toute la course de déplacement.

A cet effet, chaque maillon de transmission comprend au moins une surface de guidage 52 agencée coopérer avec les première et deuxième gorges de guidage des premier et deuxième tronçons 32 et 36 de l'élément de guidage 33 sur toute la course de déplacement de la chaîne de transmission 40. Par « coopérer », on entend que la surface de guidage 52 est en contact coulissant, glissant et/ou roulant avec l'une des gorges de guidage sur toute la course de déplacement du maillon de transmission 42 portant cette surface de guidage 52. Ainsi, lorsque le maillon de transmission 42 se trouve dans le premier tronçon 32 de l'élément de guidage 33, la surface de guidage 52 est en contact avec au moins une surface de la première gorge de guidage et lorsque le maillon de transmission 42 se trouve dans le deuxième tronçon 36, la surface de guidage 52 est en contact avec au moins une surface de la deuxième gorge de guidage. Selon le mode de réalisation représenté sur les figures, la surface de guidage 52 est formée par un galet 54 présentant un diamètre sensiblement égal à la largeur des gorges de guidage. Le galet 54 est par exemple monté sur un axe s'étendant en saillie du maillon de transmission 42 et fixe par rapport à ce maillon de transmission. L'axe présente par exemple une section sensiblement circulaire. La surface périphérique de forme cylindrique 54 forme la surface de guidage en étant en contact glissant avec les parois de l'une des gorges de guidage en au moins deux points de la surface. Selon un mode de réalisation, chaque maillon de transmission comprend deux galets 54 agencés pour coopérer respectivement avec l'un des profilés 34 ou tube formant le premier tronçon 32 et le deuxième tronçon 36. Selon un mode de réalisation, les galets 54 sont en outre mobiles en rotation par rapport aux maillons de transmission, de sorte que la surface de guidage 52 peut également rouler sur les parois des gorges de guidage. Ainsi le guidage des maillons de transmission dans l'élément de guidage 33 est assuré de façon efficace, ce qui évite tout risque de blocage ou d'enrayage du dispositif d'éjection par blocage d'un maillon de transmission 42 dans l'élément de guidage 33. Il convient de noter que la surface de guidage 52 pourrait être définie directement par la forme du maillon de transmission 42 sans nécessiter l'ajout d'un galet, cette forme pouvant être agencée pour définir un contact glissant avec l'élément de guidage 33.

Comme indiqué précédemment, pour assurer le déplacement en translation des maillons les uns par rapport aux autres et par rapport au maillon de réglage 46 et par rapport au maillon de liaison 48, chaque maillon de transmission 42 comprend deux surfaces de glissement 44, formées chacune par une paroi du maillon de transmission 42. Les parois formant les surfaces de glissement 44 peuvent être agencées de différentes façons tant qu'elles sont complémentaires et permettent un déplacement en translation des unes par rapport aux autres. Selon le mode de réalisation représenté sur les figures, chaque maillon de transmission 42 présente, dans un plan perpendiculaire au premier axe A1 et au deuxième Axes A2, une section en forme de S. Ainsi, chaque maillon de transmission 42 comprend deux branches externes et une branche interne reliées entre elles de sorte à définir deux rainures, s'étendant chacune entre la branche interne et une des branches externes et s'ouvrant selon deux directions opposées. Les parois opposées des branches externes et de la branche interne définissent chacune une surface de glissement 44. Ainsi, chaque maillon de transmission comprend six surfaces de glissement 44 définies par les parois en regard de chaque rainure et par les surfaces externes des branches externes du maillon de transmission 42. Un tel mode de réalisation permet d'assurer une liaison robuste entre les maillions de transmission 42, puisque chaque maillon de transmission 42 est maintenu dans deux rainures de maillons adjacents, y compris pour les maillons de transmission d'extrémité, comme cela sera décrit ultérieurement. Chaque surface de glissement 44 s'étend selon une direction de coulissement et toutes les surfaces de glissement 44 sont parallèles les unes par rapport aux autres.

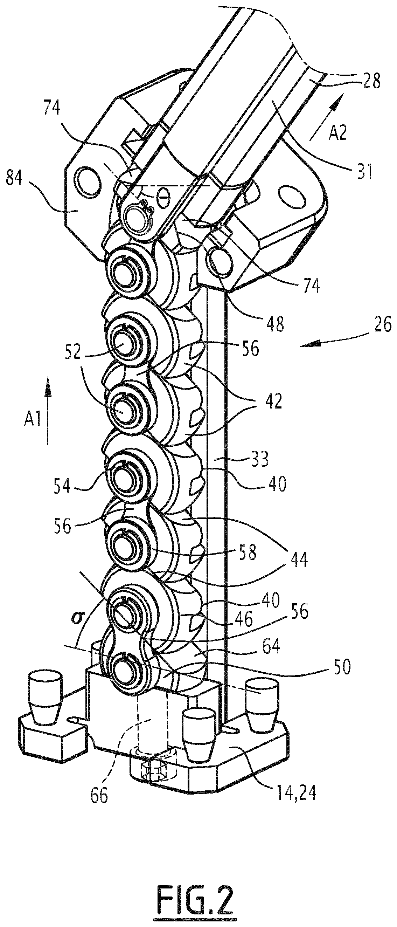

Selon le mode de réalisation représenté sur la Fig. 2, les maillons de transmission 42 sont en outre liés deux à deux par des éléments de liaison 56. Chaque élément de liaison 56 est articulé à deux maillons de transmission 42 de sorte à autoriser le déplacement en translation des deux maillons de transmission 42 liés l'un par rapport à l'autre tout en évitant un désengagement des maillons de transmission 42 l'un de l'autre, notamment lorsque la chaîne de transmission 40 n'est pas montée dans le moule de réalisation. En d'autres termes, l'élément de liaison 56 est adapté pour permettre le glissement des surfaces de glissement 44 de deux maillons de transmission 42 les unes sur les autres tout en évitant la séparation des maillons de transmission 42 lorsque la chaîne de transmission est manipulée en dehors du moule, par exemple lors de son assemblage et de son montage dans le moule. Un tel élément de liaison 56 est par exemple formé par une biellette comprenant deux extrémités 58 opposées, qui sont chacune articulées à un des maillons de transmission 42 liés par l'élément de liaison 56. Plus particulièrement, chaque extrémité 58 comprend par exemple une ouverture, par exemple de forme oblongue, recevant, de façon mobile en rotation, l'axe de forme circulaire portant le galet 54 d'un maillon de transmission 42. Un débattement est permis entre l'axe et l'élément de liaison afin de permettre la translation des maillons les uns par rapport aux autres. Selon un mode de réalisation, la surface externe des extrémités 58 forment également une surface de guidage 52 des maillons de transmission 42 dans l'élément de guidage 33, comme décrit précédemment. Selon une variante, l'élément de liaison 56 est formé par un élément flexible relié à chacune de ses extrémités à l'un des maillons de transmission 40 liés par l'élément de liaison 56. Il est entendu qu'un maillon de transmission 42 peut être lié à un maillon de transmission adjacent 42 par un élément de liaison 56 et à un autre maillon adjacent par un autre élément de liaison 56 en prévoyant des axes en saillie de chaque côté des maillons de la chaîne de transmission 40. De tels éléments de liaison 56 sont décrits dans le document FR-3 065 388 et l'homme du métier pourra s'y référer pour voir d'autres exemples de modes de réalisation envisageables.

Comme indiqué précédemment, la chaîne de transmission 40 comprend deux maillons de transmission 42 d'extrémité, dont l'un est lié à un maillon de réglage 46 et l'autre est lié à un maillon de liaison 48. Plus particulièrement, le maillon de transmission 42 d'extrémité le plus proche de la plaque d'éjection 16 est lié au maillon de réglage 46 et le maillon de transmission 42 d'extrémité le plus proche de la tige d'actionnement 31 est lié au maillon de liaison 48.

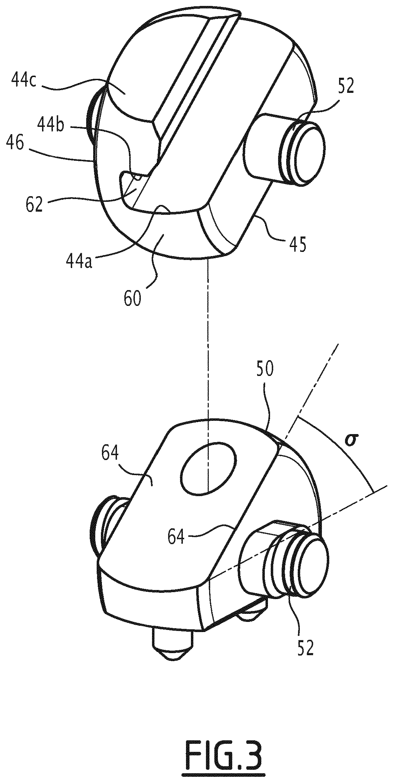

Le maillon de réglage 46 assure la coopération de la chaîne de transmission 40 avec le dispositif de poussée 14 par l'intermédiaire de la cale de réglage 50. Comme représenté sur la Fig. 3, le maillon de réglage 46 présente la forme d'un demi maillon de transmission 40. Ainsi, le maillon de réglage 46 présente d'un côté une forme de demi S formée d'une branche externe 58 et d'une branche interne 60 définissant entre elles une rainure 62. La rainure 62 permet au maillon de réglage 46 d'être engagé avec le maillon de transmission 42 d'extrémité et d'être mobile en translation par rapport à celui-ci, de la même façon que deux maillons de transmission 42 coopèrent ensemble. Ainsi, la branche externe 58 est introduite dans une rainure du maillon de transmission 42 d'extrémité et la rainure 62 reçoit une branche externe de ce maillon de transmission 42 d'extrémité. La branche externe 58 et la branche interne 60 définissent ainsi trois surfaces de glissement 44 a, 44b, 44c en contact coulissant avec trois surfaces de glissement 44 du maillon de transmission 42 d'extrémité. Le maillon de réglage 46 peut en outre être lié au maillon de transmission 42 d'extrémité par un élément de liaison 56, comme décrit précédemment. Du côté de la branche interne 60 opposé à la rainure 62, le maillon de réglage 46 comprend une surface de positionnement 45 parallèle aux surfaces de glissement 44a, 44b, 44c du maillon de réglage 46. La surface de positionnement 45 est agencée pour être appliquée sur une surface de réglage 64 de la cale de réglage 50, comme cela va à présent être décrit.

La cale de réglage 50 est montée sur le dispositif de poussée 14 de façon réversible, c'est-à-dire que la cale de réglage 50 peut être démontée du dispositif de poussée 14 afin de la remplacer par une autre cale de réglage. A cet effet, la cale de réglage 50 est par exemple vissée sur l'élément d'actionnement 24 par l'intermédiaire d'une vis 66, comme représenté sur la Fig. 2. La surface de réglage 64 est agencée pour former un angle de réglage σ par rapport à une direction sensiblement perpendiculaire au premier axe A1 lorsque la cale de réglage 50 est montée sur l'élément d'actionnement 24, comme représenté sur les Figs. 2 et 3. Ainsi, en appliquant la surface de positionnement 45 du maillon de réglage 46 sur la surface de réglage 64, on impose à la surface de positionnement 45 du maillon de réglage 46 de former un angle égal à l'angle de réglage σ avec une direction sensiblement perpendiculaire au premier axe A1. Les surfaces de glissement 44a, 44b, 44c du maillon de réglage 45 et les surfaces de glissement 44 des maillons de transmission 42 étant parallèles à la surface de positionnement 45 du maillon de réglage 46, ces surfaces de glissement 44 forment ainsi un angle égal à l'angle de réglage σ avec une direction sensiblement perpendiculaire au premier axe A1. En d'autres termes, l'angle β est égal à l'angle de réglage σ et la direction de coulissement est parallèle à la surface de réglage 64. Ainsi, en choisissant la valeur de l'angle de réglage σ, on règle l'angle σ formé par les surfaces de glissement 44 de la chaîne de transmission 40 par rapport à une direction sensiblement perpendiculaire au premier axe A1 et en changeant l'angle de réglage σ en remplaçant la cale de réglage 50 par une autre, il est possible de modifier l'angle σ. Par conséquent, en changeant une seule pièce du dispositif d'éjection, il est possible de modifier le comportement de ce dispositif d'éjection lors de son déplacement entre la position rétractée et la position d'éjection afin de l'adapter à l'article moulé 2 à réaliser, comme cela sera décrit ultérieurement. Le changement de la cale de réglage 50 par une autre présentant un angle de réglage différent se fait de façon particulièrement simple puisqu'il suffit de dévisser la cale de réglage 50 de l'élément d'actionnement 24 et d'en visser une autre avec l'angle de réglage souhaité.

Par application de la surface de positionnement 45 sur la surface de réglage 64, on entend que le maillon de réglage 46 est solidarisé avec la cale de réglage 50 par un élément de liaison 56 empêchant une déplacement relatif entre le maillon de réglage 46 et la cale de réglage 50, comme représenté sur la Fig. 2. A cet effet, l'axe de la cale de réglage 50 recevant une extrémité 58 de l'élément de liaison 56 est par exemple de forme oblongue, sensiblement complémentaire de l'ouverture oblongue de l'élément de liaison 56, afin d'empêcher un déplacement relatif entre le maillon de réglage 46 et la cale de réglage 50. A cet effet, la cale de réglage 50 et le maillon de réglage 46 comprennent au moins un galet 54, tel que décrit précédemment en référence aux maillons de transmission 42. Les galets 54 forment également des surfaces de guidage 52, comme également décrit précédemment en référence aux maillons de transmission 42.

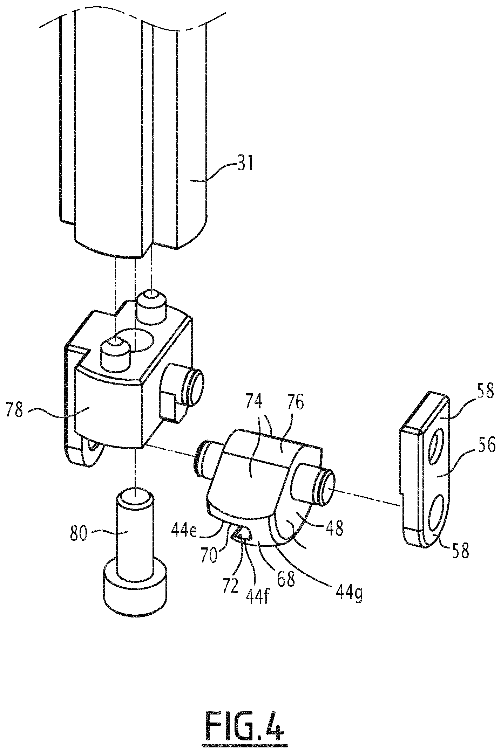

Le maillon de liaison 48, plus particulièrement représenté sur la Fig. 4, assure la liaison de la chaîne de transmission 40 avec l'élément d'éjection 28, et plus particulièrement avec la tige d'actionnement 31. Il est agencé notamment pour permettre à la tige d'actionnement 31 de s'adapter à l'ange de réglage σ choisi. Le maillon de liaison 48 présente, comme le maillon de réglage 46, d'un côté une forme de demi S formée d'une branche externe 68 et d'une branche interne 70 définissant entre elles une rainure 72. La rainure 72 permet au maillon de liaison 48 d'être engagé avec le maillon de transmission 42 d'extrémité et d'être mobile en translation par rapport à celui-ci, de la même façon que deux maillons de transmission 42 coopèrent ensemble. Ainsi, la branche externe 68 est introduite dans une rainure du maillon de transmission 42 d'extrémité et la rainure 72 reçoit une branche externe de ce maillon de transmission 42 d'extrémité. La branche externe 68 et la branche interne 70 définissent ainsi trois surfaces de glissement 44 e, 44f, 44g en contact coulissant avec trois surfaces de glissement 44 du maillon de transmission 42 d'extrémité. Le maillon de liaison 48 peut en outre être lié au maillon de transmission 42 d'extrémité par un élément de liaison 56, comme décrit précédemment. Du côté de la branche interne 70 opposé à la rainure 72, le maillon de liaison 48 comprend deux surfaces de débattement 74 de l'élément d'éjection 28 s'étendant de part et d'autre d'une partie centrale 76 du maillon de liaison 48 et convergeant chacune vers un bord de la branche interne 70 à partir de cette partie centrale 76. Par convergeant chacune vers un bord de la branche interne 70, on entend que chaque surface de débattement 74 est inclinée entre la partie centrale 76 et le bord correspondant de la branche interne 70 de sorte que le maillon de liaison 48 présente une forme sensiblement triangulaire du côté de la branche interne 70 opposée à la rainure 72. Ainsi, chaque surface de débattement 74 forme un angle Θ avec la surface de glissement 44e formée par la branche interne 70, les surfaces de débattement 74 formant deux côtés d'un triangle, dont le troisième côté est formé par la surface de glissement 44e. L'angle formé par l'une des surfaces de débattement 74 est égal à l'angle formé par l'autre surface de débattement 74 de sorte que les deux surfaces de débattement 74 sont sensiblement symétriques l'une de l'autre par rapport à la partie centrale 76. L'angle Θ est également sensiblement égal, en valeur absolue, à la plus grande valeur envisagée pour l'angle de réglage σ choisi. La plus grande valeur envisagée correspond ainsi à la cale de réglage 50 présentant le plus grand angle de réglage pouvant être utilisée avec le moule de réalisation ou avec d'autres moules de réalisation puisqu'un même dispositif d'éjection peut être utilisé avec des moules différents. Ainsi, le maillon de liaison 48 peut être utilisé avec toutes les cales de réglage 50 envisagées pour le moule de réalisation. Selon un mode de réalisation, l'angle Θ est également sensiblement égal à 35°. Les surfaces de débattement 74 inclinées libèrent un espace sous l'élément d'éjection 28 de sorte à permettre à celui-ci de s'orienter selon l'angle de réglage σ choisi par une rotation par rapport au maillon de liaison 48.

Selon un mode de réalisation, la partie centrale 76 forme elle-même une surface de débattement sensiblement parallèle aux surfaces de glissement 44e, 44f et 44g de sorte que le maillon de liaison 48 présente une section en forme de trapèze plutôt qu'en forme de triangle du côté de la branche interne 70 opposée à la rainure 72. Selon un mode de réalisation, la partie centrale 76 forme cependant une surface incurvée de rayon concentrique à l'axe portant le galet 54. Une telle forme incurvée facilite la rotation de l'élément d'éjection 28 par rapport au maillon de liaison 48, comme cela va à présent être décrit.

Le maillon de liaison 48 est mobile en rotation par rapport à la tige d'actionnement 31, par exemple par rapport à une pièce liaison 78 solidaire de la tige d'actionnement 31 et fixée à celle-ci par une vis 80, comme représenté sur la Fig. 4. Selon un mode de réalisation, la tige d'actionnement 31, et le cas échéant la pièce de liaison 78, n'est pas en contact direct avec les surfaces de débattement 74 et 76 du maillon de liaison 48 afin de limiter les frottements entre la tige d'éjection 31 et le maillon de liaison 48. Le maillon de liaison 48 peut s'orienter par rapport à la tige d'éjection 31, les surfaces de débattement 74 autorisant une telle orientation en fonction de la valeur de l'angle de réglage σ comme cela sera décrit ultérieurement. Ainsi, le maillon de liaison 48 permet d'assurer la transition entre la chaîne de transmission 40 et la tige d'actionnement 31 quelle que soit la valeur de l'angle de réglage σ afin d'assurer un déplacement selon le deuxième axe A2 de la tige d'actionnement 31 quelle que soit cette valeur.

La liaison entre le maillon de liaison 48 et la pièce de liaison 78 est par exemple assurée par un élément de liaison 56 tel que décrit précédemment. A cet effet, la pièce de liaison 78 et le maillon de liaison 48 comprennent au moins un axe s'étendant en saillie du maillon 48 et de la pièce de liaison 78, un galet 54 pouvant être montés sur ces axes, tel que décrit précédemment en référence aux maillons de transmission 42. Les galets 54 forment également des surfaces de guidage 52, comme également décrit précédemment en référence aux maillons de transmission 42.

Le dispositif d'éjection peut comprendre en outre une ou plusieurs tiges d'éjection 82 s'étendant selon des directions parallèles au premier axe A1, comme représenté sur les Fig. 1 et 5 à 7. L'une des extrémités de la tige d'éjection 82 est solidaire de la plaque d'éjection 16 et son autre extrémité affleure la surface de moulage 10 dans la position rétractée du dispositif d'éjection et forme une partie de la surface de moulage 10, comme représenté sur les Figs. 1 et 5. La ou les tigres d'éjection 82 sont agencées pour permettre l'éjection de l'article moulé 2 selon la direction d'ouverture du moule, comme cela va être décrit à présent.

Le fonctionnement du dispositif d'éjection décrit ci-dessus va à présent être décrit.

Au cours du moulage de l'article, le moule est en position fermée et le dispositif d'éjection est en position rétractée, dans laquelle la plaque d'éjection 16 se trouve dans la partie amont 20 de l'espace 18, la tige d'éjection 82 affleure la surface de moulage 10 et dans laquelle, selon le mode de réalisation représenté sur les figures, l'élément d'éjection 28 définit avec la première partie 8 la cavité de moulage secondaire par sa surface de moulage secondaire 12.

Une fois que l'article a été réalisé, le moule est ouvert en écartant les première et deuxième parties de moule l'une de l'autre selon la direction d'ouverture D. Au cours de cette ouverture ou après celle-ci, le dispositif d'éjection est actionné pour passer de sa position rétractée à sa position d'éjection.

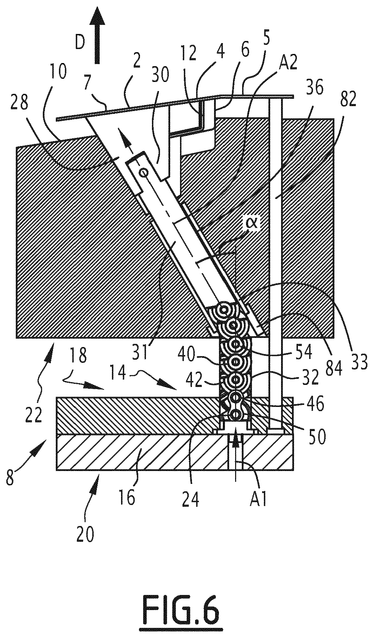

Pour ce faire, la plaque d'éjection 16 est actionnée pour se déplacer dans l'espace 18 vers la partie aval 22 de cet espace 18, comme représenté sur la Fig. 6. Au cours de ce déplacement, la plaque d'éjection 16 se déplace selon le premier axe A1 en coulissant autour du premier tronçon 32 de l'élément de guidage 33, ce premier tronçon 32 pénétrant dans l'empreinte 38 de la plaque d'éjection 16 prévue à cet effet.

Le déplacement de la plaque d'éjection 16 entraîne le déplacement de la tige d'éjection 82 selon une direction parallèle au premier axe A1, ce qui écarte l'article moulé 2 de la surface de moulage 10 selon cette direction, comme représenté sur la Fig. 6.

En outre, le déplacement de la plaque d'éjection entraîne le déplacement de la cale de réglage 50 selon le premier axe A1 qui, elle-même entraîne le déplacement de la chaîne de transmission 40 dans l'élément de guidage 33, la chaîne de transmission 40 entraînant le déplacement de l'élément d'éjection 28.

Comme représenté sur la Fig. 1, en position rétractée, les maillons de transmission 42 se trouvent initialement dans le premier tronçon 32 de l'élément de guidage 33. Le déplacement de la plaque d'éjection 16 entraine un déplacement selon le premier axe A1 des maillons 42 qui s'engagent progressivement dans le deuxième tronçon 36 et changent de direction pour se déplacer selon le deuxième axe A2, comme représenté sur la Fig. 6. Ce changement de direction est possible par le glissement des surfaces de glissement 44 des maillons de la chaîne de transmission 40 les unes par rapport aux autres.

Le déplacement des maillons selon le deuxième axe A2 entraîne un déplacement selon cet axe de la tige d'actionnement 31 et du bloc mobile. Du fait de l'angle α entre le premier axe A1 et le deuxième axe A2, le déplacement de la tige d'actionnement 31 entraîne un glissement du bloc mobile hors de la zone en contredépouille 6, comme représenté sur la Fig. 6, ce qui permet de démouler cette zone. Il convient de noter qu'en adaptant la valeur de l'angle de réglage σ, et donc de l'angle β formé par les surfaces de glissement 44, il est possible de retarder ou d'accélérer le déplacement du bloc mobile hors de la zone en contredépouille 6 par rapport au déplacement du dispositif de poussée 14. C'est-à-dire que, pour un déplacement à une vitesse donnée du dispositif de poussée 14 selon le premier axe A1, le bloc mobile se déplacera à une vitesse supérieure, dans le cas d'un mouvement accéléré, ou inférieure, dans le cas d'un mouvement retardé, à cette vitesse donnée. L'accélération ou le retard du déplacement du bloc mobile par rapport au dispositif de poussée 14 permet de synchroniser le déplacement du bloc mobile avec celui du ou des tiges d'éjection 82 afin que le bloc mobile et les tiges d'éjection 82 atteignent la position d'éjection en même temps alors que les courses d'éjection sont différentes.

Sur la Fig. 8, l'angle α est sensiblement égal à 30° et l'angle de réglage σ est nul, c'est-à-dire que la surface de réglage 64 de la cale de réglage 50 s'étend sensiblement perpendiculairement au premier axe A1. Dans ce cas, le bloc mobile se déplace à la même vitesse que le dispositif de poussée 14.

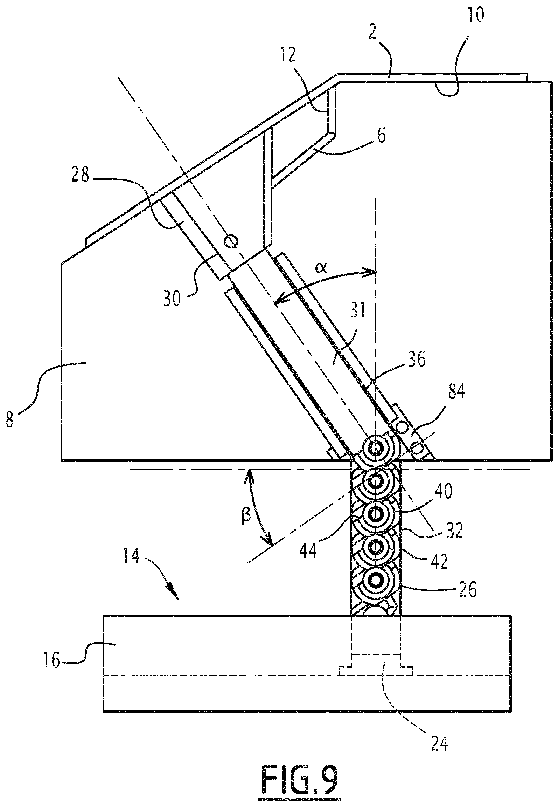

Sur la Fig. 9, l'angle α est sensiblement égal à 35° et l'angle de réglage σ est sensiblement égal à -35°. Dans ce cas, le bloc mobile se déplace à une vitesse inférieure à la vitesse de déplacement du dispositif de poussée 14.

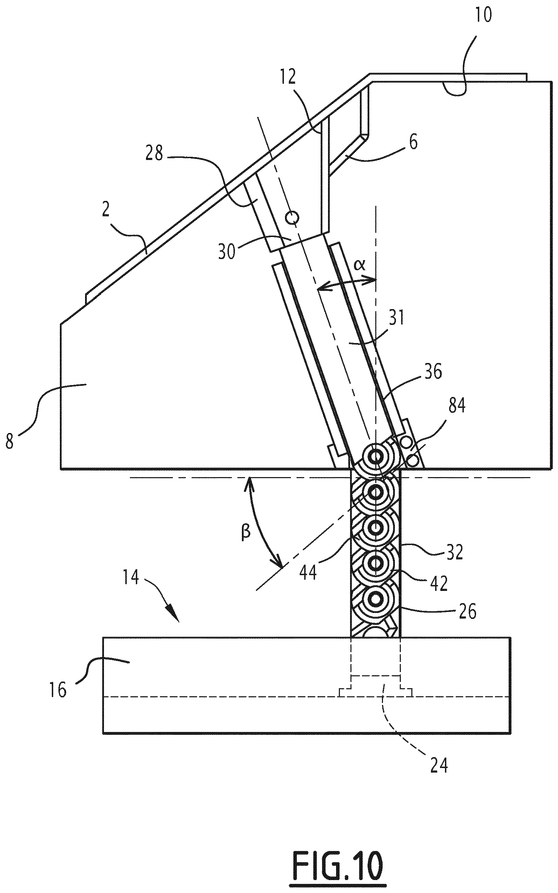

Sur la Fig. 10, l'angle α est sensiblement égal à 20° et l'angle de réglage σ est sensiblement égal à -40°. Dans ce cas, le bloc mobile se déplace à une vitesse inférieure à la vitesse de déplacement du dispositif de poussée 14.

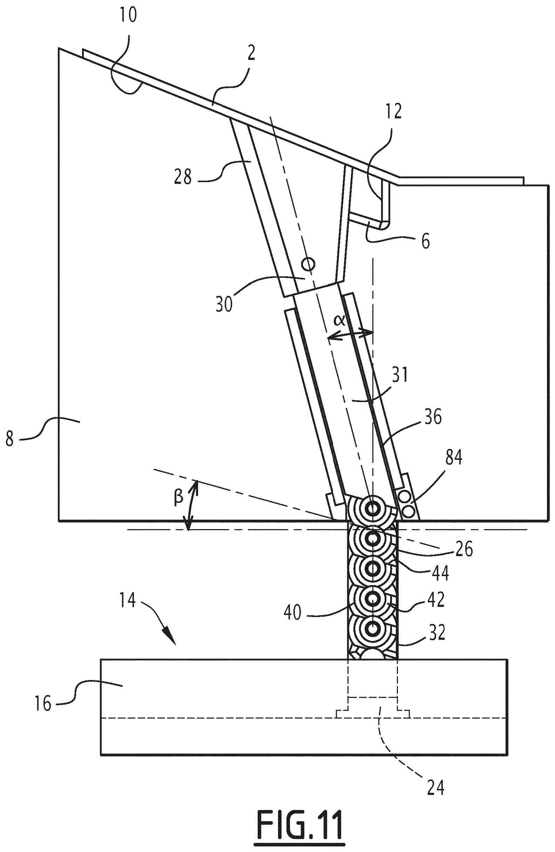

Sur la Fig. 11, l'angle α est sensiblement égal à 15° et l'angle de réglage σ est sensiblement égal à 20°. Dans ce cas, le bloc mobile se déplace à une vitesse supérieure à la vitesse de déplacement du dispositif de poussée 14.

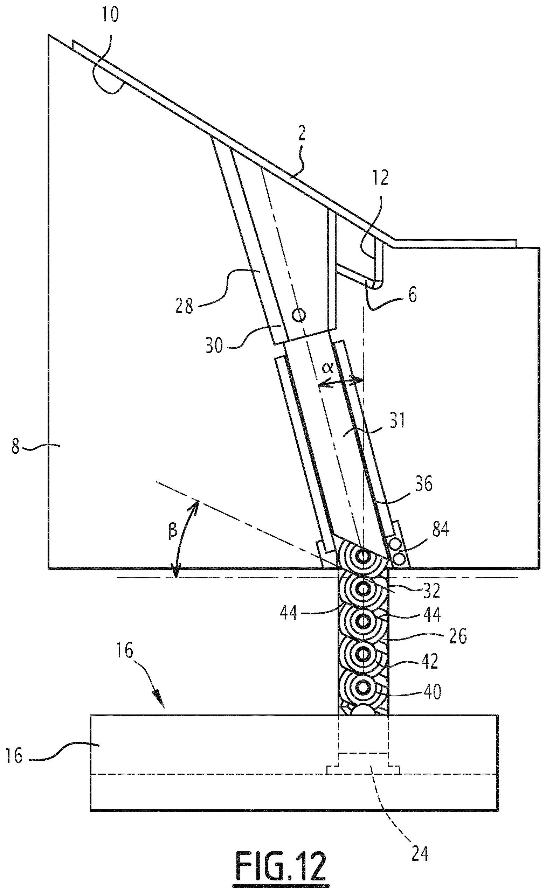

Sur la Fig. 12, l'angle α est sensiblement égal à 15° et l'angle de réglage σ est sensiblement égal à 30°. Dans ce cas, le bloc mobile se déplace à une vitesse supérieure à la vitesse de déplacement du dispositif de poussée 14.

Ainsi, on comprend qu'en choisissant un angle de réglage σ négatif, le déplacement du bloc mobile est retardé et en choisissant un angle de réglage σ positif, le déplacement du bloc mobile est accéléré. Le changement d'angle de réglage se fait facilement en remplaçant la cale de réglage 50 par une autre et éventuellement en remplaçant également le maillon de liaison 48, comme décrit précédemment. Cependant, comme décrit précédemment, un même maillon de liaison 48 peut être utilisé avec les différentes cales de réglage 50 pouvant être utilisée dans le moule de réalisation.

Lorsque la plaque d'éjection 16 atteint sa position d'éjection, dans laquelle elle est par exemple en contact avec la paroi supérieure de l'espace 18 de la première partie 8, comme représenté sur la Fig. 7, l'article moulé 2 est complètement séparé de la surface de moulage 10 et le bloc mobile est complètement extrait de la zone en contredépouille 6. Ainsi, l'article moulé 2 peut être retiré du moule sans encombre et sans interférence avec l'une des parties du moule et du dispositif d'éjection.

Le dispositif d'éjection décrit ci-dessus permet donc l'éjection d'articles moulés de grandes dimensions et/ou de forme complexe sans affaiblir la première partie du moule 8. En outre, le dispositif de transfert peut être utilisé pour adapter le dispositif d'éjection à la forme de l'article moulé 2. La chaîne de transmission 40 peut être facilement modifiée en ajoutant ou en supprimant des maillons de transmission 42, qui sont tous identiques et interchangeables. En outre, l'angle α entre le premier axe A1 et le deuxième axe A2 peut être modifié en changeant simplement une pièce d'interface 84 interposée entre le premier tronçon 32 et le deuxième tronçon 36. Cette pièce d'interface 84 permet de plus ou moins incliner le deuxième tronçon 36 par rapport au premier tronçon 32. Ainsi, des éléments communs du dispositif d'éjection, tels que les maillons de transmission 42, la tige d'actionnement 31, les premier et deuxième tronçons 32, 36, l'élément d'actionnement 24, la plaque d'éjection 16 et la ou les tiges d'éjection 82 peuvent être utilisés pour différents moules. Il suffit de changer uniquement le bloc mobile lorsque la forme de la surface de moulage secondaire 12 doit être modifiée et/ou la pièce d'interface 84 lorsque l'angle α doit être modifié et/ou la cale de réglage 50 lorsque l'angle β doit être modifié. On notera qu'auparavant, l'angle β était réglé en modifiant la tige d'actionnement 31 pour que son interface avec la chaîne de transmission impose l'orientation de la direction de coulissement souhaitée. Ainsi, pour modifier l'angle β, il était nécessaire de changer la tige d'actionnement 31. Selon l'invention, l'angle β est réglé par la cale de réglage 50 et une seule tige d'actionnement 31 peut ainsi être utilisée quel que soit l'angle souhaité. La tige d'actionnement 31 peut donc être usinée de façon simple et présenter une longueur constante pour différents moules de réalisation.

Le dispositif d'éjection décrit ci-dessus peut être modifié de diverses façons tout en restant conforme à l'invention. Ainsi, à titre d'exemple, l'élément d'éjection 28 pourrait ne pas comprendre de surface de moulage secondaire et servir uniquement à la séparation de l'article moulé 2 de la surface de moulage 10, notamment lorsque la surface principale 4 de l'article moulé 2 présente des zones s'étendant dans des directions différentes d'une direction sensiblement perpendiculaire à la direction d'ouverture. Les maillons de transmission 42 pourraient également être formés de simples pavés dont les surfaces externes forment les surfaces de glissement et de guidage. Dans un tel mode de réalisation, les maillons 42 ne sont pas directement liés les uns aux autres et sont en simple contact glissant les uns par rapport aux autres.

En outre, il est entendu que le moule pourrait comprendre plusieurs éléments d'éjection 28 et plusieurs dispositifs de transfert 26 correspondants pour permettre le moulage et l'éjection de plusieurs zones en contredépouille 6 et/ou l'éjection de plusieurs zones de forme complexe de la surface principale 4. Dans ce cas, une seule plaque d'éjection portant plusieurs cales de réglage 50 peut être prévue pour actionner simultanément tous les éléments d'éjection 28.

## Revendications

1. Dispositif d'éjection pour moule de réalisation d'un article moulé (2) dans une cavité de moulage destiné à permettre l'éjection de l'article moulé (2) hors de la cavité de moulage, ledit dispositif comprenant :
- un dispositif de poussée (14) mobile en translation selon un premier axe (A1) entre une position rétractée et une position d'éjection,
- au moins un élément d'éjection (28) mobile en translation selon un deuxième axe (A2), différent du premier axe (A1), entre une position rétractée et une position d'éjection,
- au moins un dispositif de transfert (26) reliant le dispositif de poussée (14) et l'élément d'éjection (28), ledit dispositif de transfert (26) étant agencé pour déplacer l'élément d'éjection (28) selon le deuxième axe (A2) entre sa position rétractée et sa position d'éjection lorsque le dispositif de poussée (14) est déplacé selon le premier axe (A1) entre sa position rétractée et sa position d'éjection, le dispositif de transfert (26) comprenant une chaîne de transmission (40) comprenant au moins deux maillons de transmission (42) mobiles en translation selon une direction de coulissement l'un par rapport à l'autre et par rapport au dispositif de poussée (14) et à l'élément d'éjection (28),
le dispositif d'éjection étant **caractérisé en ce qu'**il comprend en outre au moins une cale de réglage (50) montée sur le dispositif de poussée (14), ladite cale de réglage (50) comprenant une surface de réglage (64) formant un angle de réglage (σ) par rapport à une direction sensiblement perpendiculaire au premier axe (A1), la chaîne de transmission (40) étant montée sur ladite surface de réglage (64) de sorte que la direction de coulissement est sensiblement parallèle à ladite surface de réglage (64).

2. Dispositif d'éjection selon la revendication 1, dans lequel l'angle de réglage (σ) est négatif pour retarder le déplacement de l'élément d'éjection (28) par rapport au dispositif de poussée (14), positif pour accélérer le déplacement de l'élément d'éjection (28) par rapport au dispositif de poussée (14) ou nul pour déplacer l'élément d'éjection (28) à la même vitesse que le dispositif de poussée (14).

3. Dispositif d'éjection selon la revendication 1 ou 2, dans lequel la chaîne de transmission (40) comprend un maillon de liaison (48), monté mobile en translation sur un maillon de transmission (42) d'une part, l'élément d'éjection (28) étant monté mobile en rotation sur ledit maillon de liaison (48) autour d'un axe de rotation sensiblement perpendiculaire aux premier et deuxième axes (A1, A2).

4. Dispositif d'éjection selon la revendication 3, dans lequel le maillon de liaison (48) comprend deux surfaces de débattement (74) de l'élément d'éjection (28), les deux surfaces de débattement (74) s'étendant chacune d'une partie centrale (76) du maillon de liaison (48) vers un bord dudit maillon de liaison (48), le maillon de liaison (48) s'orientant par rapport à l'élément d'éjection (28), les surfaces de débattement (74) autorisant cette orientation en fonction de l'angle de réglage (σ) lorsque l'élément d'éjection (28) se déplace selon le deuxième axe (A2) entre sa position rétractée et sa position d'éjection.

5. Dispositif d'éjection selon la revendication 4, dans lequel les deux surfaces de débattement (74) du maillon de liaison (48) sont sensiblement symétriques l'une de l'autre par rapport à la partie centrale (76) du maillon de liaison (48).

6. Dispositif d'éjection selon l'une quelconque des revendications 3 à 5, dans lequel le maillon de liaison (48) est lié à l'élément d'éjection (28) par un élément de liaison (56) articulé au maillon de liaison (48) et à la l'élément d'éjection (28) de sorte à autoriser une rotation du maillon de liaison (48) par rapport à l'élément d'éjection (28).

7. Dispositif d'éjection selon l'une quelconque des revendications 1 à 6, dans lequel la chaîne de transmission (40) comprend un maillon de réglage (46) monté mobile en translation sur un maillon de transmission (42), le maillon de réglage (46) comprenant une surface de positionnement (45) s'étendant sur la surface de réglage (64) de la cale de réglage (50) de sorte que la direction de coulissement entre le maillon de réglage (46) et le maillon de transmission (42) est sensiblement parallèle à ladite surface de réglage (64).

8. Dispositif d'éjection selon l'une quelconque des revendications 1 à 7, dans lequel chaque maillon de la chaîne de transmission (40) comprend au moins deux surfaces de glissement (44), agencées pour coulisser sur des surfaces de glissement (44) de maillons adjacents, lesdites surfaces de glissement (44) s'étendant sensiblement parallèlement à la surface de réglage (64) de la cale de réglage (50).

9. Dispositif d'éjection selon l'une quelconque des revendications 1 à 8, dans lequel chaque maillon de la chaîne de transmission (40) est lié à au moins un autre maillon de la chaîne de transmission (40) par au moins un élément de liaison (56) agencé pour autoriser le déplacement en translation des maillons l'un par rapport à l'autre.

10. Dispositif d'éjection selon l'une quelconque des revendications 1 à 9, dans lequel les maillons de transmission (42) sont identiques les uns aux autres.

## Patentansprüche

1. Ausstoßvorrichtung für eine Form zum Herstellen eines Formartikels (2) in einem Formhohlraum, wobei die Vorrichtung geeignet ist, das Ausstoßen des Formartikels (2) aus dem Formhohlraum zu ermöglichen, wobei die Vorrichtung umfasst:
- eine Schubvorrichtung (14), die entlang einer ersten Achse (A1) zwischen einer zurückgezogenen Position und einer Ausstoßposition translatorisch bewegbar ist,
- mindestens ein Ausstoßelement (28), das entlang einer zweiten Achse (A2), die sich von der ersten Achse (A1) unterscheidet, zwischen einer zurückgezogenen Position und einer Ausstoßposition translatorisch bewegbar ist,
- mindestens eine Übertragungsvorrichtung (26), die die Schubvorrichtung (14) und das Ausstoßelement (28) verbindet, wobei die Übertragungsvorrichtung (26) dazu eingerichtet ist, das Ausstoßelement (28) entlang der zweiten Achse (A2) zwischen seiner zurückgezogenen Position und seiner Ausstoßposition zu bewegen, wenn die Schubvorrichtung (14) entlang der ersten Achse (A1) zwischen ihrer zurückgezogenen Position und ihrer Ausstoßposition bewegt wird, wobei die Übertragungsvorrichtung (26) eine Übertragungskette (40) umfasst, die mindestens zwei Übertragungsglieder (42) umfasst, die in einer Gleitrichtung relativ zueinander und relativ zur Schubvorrichtung (14) und zum Ausstoßelement (28) translatorisch bewegbar sind,
wobei die Ausstoßvorrichtung **dadurch gekennzeichnet, dass** es ferner mindestens einen Einstellkeil (50), der an der Schubvorrichtung (14) montiert ist, umfasst, wobei der Einstellkeil (50) eine Einstellfläche (64) umfasst, die einen Einstellwinkel (σ) in Bezug auf eine Richtung bildet, die im Wesentlichen senkrecht zur ersten Achse (A1) steht, und die Antriebskette (40) so an der Einstellfläche (64) montiert ist, dass die Gleitrichtung im Wesentlichen parallel zur Einstellfläche (64) verläuft.

2. Ausstoßvorrichtung nach Anspruch 1, wobei der Einstellwinkel (σ) negativ ist, um die Bewegung des Ausstoßelements (28) in Bezug auf die Schubvorrichtung (14) zu verlangsamen, positiv ist, um die Bewegung des Ausstoßelements (28) in Bezug auf die Schubvorrichtung (14) zu beschleunigen, oder Null ist, um das Ausstoßelement (28) mit der gleichen Geschwindigkeit wie die Schubvorrichtung (14) zu bewegen.

3. Ausstoßvorrichtung nach Anspruch 1 oder 2, wobei die Übertragungskette (40) ein Verbindungsglied (48) umfasst, das für eine Translationsbewegung auf einem Übertragungsglied (42) montiert ist, wobei das Ausstoßelement (28) für eine Drehbewegung auf dem Verbindungsglied (48) um eine Drehachse montiert ist, die im Wesentlichen senkrecht zu der ersten und der zweiten Achse (A1, A2) ist.

4. Ausstoßvorrichtung nach Anspruch 3, wobei das Verbindungsglied (48) zwei Ablenkflächen (74) des Ausstoßelements (28) umfasst, wobei sich die beiden Ablenkflächen (74) jeweils von einem Mittelabschnitt (76) des Verbindungsglieds (48) zu einem Rand des Verbindungsglieds (48) erstrecken, wobei sich das Verbindungsglied (48) in Bezug auf das Ausstoßelement (28) ausrichtet, und wobei die Ablenkflächen (74) diese Ausrichtung basierend auf dem Einstellwinkel (σ) ermöglichen, wenn sich das Ausstoßelement (28) entlang der zweiten Achse (A2) zwischen seiner zurückgezogenen Position und seiner Ausstoßposition bewegt.

5. Ausstoßvorrichtung nach Anspruch 4, wobei die beiden Ablenkflächen (74) des Verbindungsglieds (48) im Wesentlichen symmetrisch zueinander in Bezug auf den Mittelabschnitt (76) des Verbindungsglieds (48) sind.

6. Ausstoßvorrichtung nach einem der Ansprüche 3 bis 5, wobei das Verbindungsglied (48) mit dem Ausstoßelement (28) durch ein Verbindungselement (56) verbunden ist, das gelenkig mit dem Verbindungsglied (48) und dem Ausstoßelement (28) verbunden ist, um eine Drehung des Verbindungsglieds (48) in Bezug auf das Ausstoßelement (28) zu ermöglichen.

7. Ausstoßvorrichtung nach einem der Ansprüche 1 bis 6, wobei die Übertragungskette (40) ein Einstellglied (46) umfasst, das für eine Translationsbewegung auf einem Übertragungsglied (42) montiert ist, wobei das Einstellglied (46) eine Positionierungsfläche (45) umfasst, die sich über die Einstellfläche (64) des Einstellkeils (50) erstreckt, so dass die Gleitrichtung zwischen dem Einstellglied (46) und dem Übertragungsglied (42) im Wesentlichen parallel zu der Einstellfläche (64) ist.

8. Ausstoßvorrichtung nach einem der Ansprüche 1 bis 7, wobei jedes Glied der Antriebskette (40) mindestens zwei Gleitflächen (44) umfasst, die so angeordnet sind, dass sie auf Gleitflächen (44) benachbarter Glieder gleiten, wobei die Gleitflächen (44) im Wesentlichen parallel zur Einstellfläche (64) des Einstellkeils (50) verlaufen.

9. Ausstoßvorrichtung nach einem der Ansprüche 1 bis 8, wobei jedes Glied der Antriebskette (40) mit mindestens einem anderen Glied der Antriebskette (40) durch mindestens ein Verbindungselement (56) verbunden ist, das so angeordnet ist, dass es eine Translationsbewegung der Glieder relativ zueinander ermöglicht.

10. Ausstoßvorrichtung nach einem der Ansprüche 1 bis 9, wobei die Übertragungsglieder (42) miteinander identisch sind.

## Claims

1. Ejection device for a mold for producing a molded article (2) in a molding cavity, said device being suitable for allowing the molded article (2) to be ejected from the molding cavity, said device comprising:
- a thrust device (14) movable in translation along a first axis (A1) between a retracted position and an ejection position,
- at least one ejection element (28) movable in translation along a second axis (A2), different from the first axis (A1), between a retracted position and an ejection position,
- at least one transfer device (26) connecting the thrust device (14) and the ejection element (28), said transfer device (26) being arranged to move the ejection element (28) along the second axis (A2) between its retracted position and its ejection position when the thrust device (14) is moved along the first axis (A1) between its retracted position and its ejection position, the transfer device (26) comprising a transmission chain (40) comprising at least two transmission links (42) movable in translation in a direction of sliding with respect to each other and with respect to the thrust device (14) and the ejection element (28),
the ejection device being **characterized in that** it further comprises at least one adjustment wedge (50) mounted on the thrust device (14), said adjustment wedge (50) comprising an adjustment surface (64) forming an adjustment angle (σ) with respect to a direction substantially perpendicular to the first axis (A1), the transmission chain (40) being mounted on said adjustment surface (64) so that the direction of sliding is substantially parallel to said adjustment surface (64).

2. Ejection device according to claim 1, wherein the adjustment angle (σ) is negative to slow movement of the ejection element (28) with respect to the thrust device (14), positive to accelerate movement of the ejection element (28) with respect to the thrust device (14), or zero to move the ejection element (28) at the same speed as the thrust device (14).

3. Ejection device according to claim 1 or 2, wherein the transmission chain (40) comprises a connecting link (48), mounted for translational movement on a transmission link (42), the ejection element (28) being mounted for rotational movement on said connecting link (48) about an axis of rotation substantially perpendicular to the first and second axes (A1, A2).

4. Ejection device according to claim 3, wherein the connecting link (48) comprises two deflection surfaces (74) of the ejection element (28), the two deflection surfaces (74) each extending from a central portion (76) of the connecting link (48) to an edge of said connecting link (48), the connecting link (48) orienting itself with respect to the ejection element (28), the deflection surfaces (74) allowing this orientation based on the adjustment angle (σ) when the ejection element (28) moves along the second axis (A2) between its retracted position and its ejection position.

5. Ejection device according to claim 4, wherein the two deflection surfaces (74) of the connecting link (48) are substantially symmetrical to each other with respect to the central portion (76) of the connecting link (48).

6. Ejection device according to any of claims 3 to 5, wherein the connecting link (48) is connected to the ejection element (28) by a connecting element (56) articulated to the connecting link (48) and to the ejection element (28) so as to allow rotation of the connecting link (48) with respect to the ejection element (28).

7. Ejection device according to any of claims 1 to 6, wherein the transmission chain (40) comprises an adjustment link (46) mounted for translational movement on a transmission link (42), the adjustment link (46) comprising a positioning surface (45) extending over the adjustment surface (64) of the adjustment wedge (50) so that the direction of sliding between the adjustment link (46) and the transmission link (42) is substantially parallel to said adjustment surface (64).

8. Ejection device according to any of claims 1 to 7, wherein each link of the transmission chain (40) comprises at least two sliding surfaces (44), arranged to slide on sliding surfaces (44) of adjacent links, said sliding surfaces (44) extending substantially parallel to the adjustment surface (64) of the adjustment wedge (50).

9. Ejection device according to any of claims 1 to 8, wherein each link of the transmission chain (40) is connected to at least one other link of the transmission chain (40) by at least one connecting element (56) arranged to allow translational movement of the links with respect to one another.

10. Ejection device according to any of claims 1 to 9, wherein the transmission links (42) are identical to one another.
